(19) Europäisches Patentamt
European Patent Office
Office européen des brevets

(11) Veröffentlichungsnummer: **0 003 301**
**A1**

(12) **EUROPÄISCHE PATENTANMELDUNG**

(21) Anmeldenummer: **79100102.7**

(22) Anmeldetag: **15.01.79**

(51) Int. Cl.$^2$: **C 07 C 161/00**
**A 01 N 9/12**

(30) Priorität: **26.01.78 DE 2803253**

(43) Veröffentlichungstag der Anmeldung:
**08.08.79 Patentblatt 79/16**

(84) Benannte Vertragsstaaten:
**BE CH DE FR GB IT NL**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Stetter, Jörg, Dr.**
**Pahlkestrasse 3**
**D-5600 Wuppertal 1(DE)**

(72) Erfinder: **Draber, Wilfried, Dr.**
**In den Birken 81**
**D-5600 Wuppertal 1(DE)**

(72) Erfinder: **Timmler, Helmut, Dr.**
**Tersteegenweg 16**
**D-5600 Wuppertal-1(DE)**

(72) Erfinder: **Hammann, Ingeborg, Dr.**
**Belfortstrasse 9**
**D-5000 Köln(DE)**

(72) Erfinder: **Homeyer, Bernhard, Dr.**
**Obere Strasse 28**
**D-5090 Leverkusen 3(DE)**

(54) **N-Sulfenylierte Carbamoyl-oxime, Verfahren zu ihrer Herstellung und ihre Verwendung als Insektizide, Akarizide und Nematozide.**

(57) Die vorliegende Erfindung betrifft neue N-sulfenylierte Carbamoyloxime der Formel

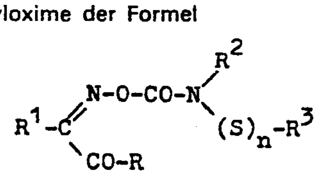
(I)

in welcher
$R^1$, R, $R^2$, $R^3$ und n die in der Beschreibung angegebene Bedeutung besitzen. Sie weisen starke insektizide, akarizide und nematizide Eigenschaften auf. Sie werden erhalten, wenn man Oxime der Formel

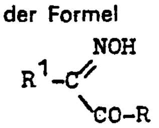
(II)

mit sulfenylierten Carbamoylhalogeniden der Formel

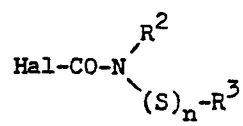
(III)

umsetzt oder Oxicarbamate der Formel

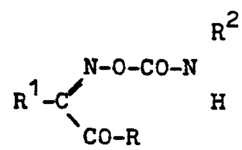
IV)

mit Sulfenchloriden der Formel

$$Cl-(S)_n-R^3 \quad (V)$$

umsetzt.

EP 0 003 301 A1

0003301



BAYER AKTIENGESELLSCHAFT 5090 Leverkusen, Bayerwerk
Zentralbereich RT/Bä
Patente, Marken und Lizenzen Ib

N-sulfenylierte Carbamoyl-oxime, Verfahren zu ihrer Herstellung und ihre Verwendung als Insektizide, Akarizide und Nematozide

Die vorliegende Erfindung betrifft neue N-sulfenylierte Carbamoyloxime, mehrere Verfahren zu ihrer Herstellung und ihre Verwendung als Insektizide, Akarizide und Nematozide.

Es ist bereits bekannt geworden, daß bestimmte Carbamoyloxime, wie beispielsweise tert.-Butyl-alkoxycarbonyl-keton-O-dimethyl- bzw. -methylcarbamoyl-oxime und tert.-Butylcarbamoyl-keton-O-dimethyl- bzw. -methylcarbamoyl-oxime pestizide, insbesondere insektizide Eigenschaften besitzen (vergleiche DT-OS 2 517 653 (Le A 16 358)). Deren Wirkung ist jedoch, insbesondere bei niedrigen Aufwandmengen, nicht immer voll befriedigend.

Es wurden nun die neuen N-sulfenylierten Carbamoyl-oxime der Formel (I)

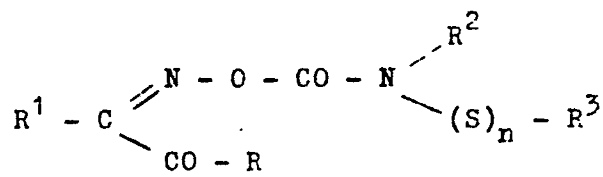

(I)

in welcher

R für Alkoxy, Amino, Monoalkyl- oder Dialkylamino steht,

$R^1$ für Alkyl oder Cycloalkyl steht,

$R^2$ für Alkyl steht,

$R^3$ für Alkyl, Halogenalkyl, gegebenenfalls substituiertes Phenyl oder Alkoxycarbonyl steht, oder für den gleichen Rest steht, an den der Rest $-(S)_n-R^3$ gebunden ist, oder für den Rest

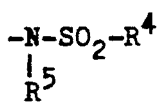

steht, wobei

$R^4$ für Alkyl, Dialkylamino oder gegebenenfalls substituiertes Phenyl steht, und

$R^5$ für Alkyl steht, oder für den Rest

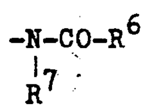

steht, wobei

$R^6$ für Alkyl, Alkoxy, Amino, Monoalkyl- oder Dialkylamino steht, und

$R^7$ für Alkyl steht,

oder für den Rest $-NR^8R^9$ steht, wobei

$R^8$ und $R^9$ für Alkyl stehen, oder gemeinsam mit dem angrenzenden N-Atom einen 5- bis 7-gliedrigen carbocyclischen Ring bilden, der gegebenenfalls weitere Heteroatome enthalten kann und

n für die ganzen Zahlen 1 oder 2 steht,

gefunden. Sie weisen starke insektizide, akarizide und nematozide Eigenschaften auf.

Die Verbindungen der Formel (I) können in der syn- oder anti-Form vorliegen; vorwiegend fallen sie als Gemische beider Formen an.

Weiterhin wurde gefunden, daß man die N-sulfenylierten Carbamoyl-oxime der Formel (I) erhält, wenn man

a) Oxime der Formel (II)

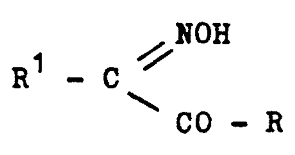

(II)

in welcher

R und $R^1$ die oben angegebene Bedeutung haben,

mit sulfenylierten Carbamoylhalogeniden der Formel (III)

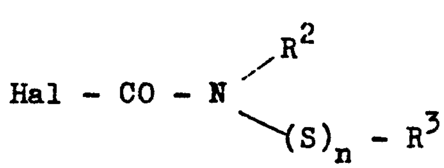

(III)

in welcher

$R^2$, $R^3$ und n die oben angegebene Bedeutung haben, und

Hal für Fluor oder Chlor steht,

in Gegenwart eines Verdünnungsmittels und eines säurebindenden Mittels umsetzt, oder

b) Oxicarbamate der Formel (IV)

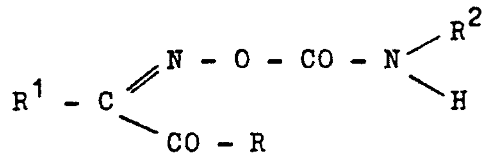

(IV)

in welcher

R, $R^1$ und $R^2$ die oben angegebene Bedeutung haben,

mit Sulfenchloriden der Formel (V)

$$Cl - (S)_n - R^3 \qquad (V)$$

in welcher

$R^3$ und n die oben angegebene Bedeutung haben,

in Gegenwart eines Verdünnungsmittels und eines säurebindenden Mittels umsetzt.

Überraschenderweise zeigen die erfindungsgemäßem N-sulfenylierten Carbamoyl-oxime eine höhere insektizide und nematozide Wirkung als die bekannten Carbamoyl-oxime, wie beispielsweise tert.-Butyl-alkoxycarbonyl-keton-O-dimethyl- bzw. methylcarbamoyl- oxime und tert.-Butyl-carbamoyl-keton-O-dimethyl- bzw. methylcarbamoyl-oxime, welche chemisch und wirkungsmäßig naheliegende Verbindungen sind. Die erfindungsgemäßen Wirkstoffe stellen somit eine Bereicherung der Technik dar.

Bevorzugte Verbindungen der Formel I sind solche, in denen R vorzugsweise für Alkoxy mit 1 bis 4 Kohlenstoffatomen, Amino, Alkyl- oder Dialkylamino mit 1 bis 2 Kohlenstoffatomen in jedem Alkylteil steht und $R^1$ vorzugsweise für geradkettiges oder verzweigtes Alkyl mit 1 bis 6 Kohlenstoffatomen, insbesondere für tert.-Butyl oder Cyclohexyl steht und $R^2$ vorzugsweise für geradkettiges oder verzweigtes Alkyl mit 1 bis 4 Kohlenstoffatomen steht und $R^3$ vorzugsweise für Alkyl mit 1 bis 4 Kohlenstoffatomen, Halogenalkyl mit 1 bis 2 Kohlenstoff- und bis zu 5 Halogenatomen, wie insbesondere Fluor- und Chloratomen, beispielsweise seien Trifluormethyl, Chlor-difluor-methyl, Dichlorfluor-methyl und Trichlormethyl genannt, gegebenenfalls substituiertes Phenyl, wobei als Substituenten vorzugsweise genannt seien: Halogen, insbesondere Fluor, Chlor oder Brom, Nitro, Cyano, Alkyl mit 1 bis 2 Kohlenstoffatomen und Halogenalkyl mit 1 bis 2 Kohlenstoffatomen und bis zu 5 Halogenatomen, wie insbesondere Fluor- und Chloratomen, beispielsweise sei die Trifluormethylgruppe genannt, Alkoxycarbonyl mit 1 bis 4 Kohlenstoffatomen im Alkoxyteil, Alkoxy, Halogenalkoxy, Alkylmercapto, Halogenalkylmercapto mit 1 bis 4 C-Atomen, insbesondere Trifluormethoxy oder Trifluormethylmercapto, sowie für den gleichen Rest, an den die Gruppierung $-(S)_nR^3$ gebunden ist, steht. Ferner steht $R^3$ vorzugsweise für den Rest $-NR^5-SO_2-R^4$, wobei $R^5$ vorzugsweise für Alkyl mit 1 bis 4 Kohlenstoffatomen steht. $R^4$ steht vorzugsweise für Alkyl oder Dialkylamino mit jeweils 1 bis 4 Kohlenstoffatomen in jedem Alkylteil sowie für gegebenenfalls substituiertes Phenyl, wobei als Substituenten vorzugsweise infrage Kommen: Halogen, insbesondere Fluor, Chlor oder Brom, Alkyl mit 1 bis 2 Kohlenstoffatomen, Halogenalkyl mit 1 bis 2 Kohlenstoff- und bis zu 5 Halogenatomen, wie insbesondere Fluor- oder Chloratomen, beispielsweise sei Trifluormethyl genannt, Cyano oder Nitro. Weiterhin steht $R^3$ für die Gruppierung $-NR^7-CO-R^6$, wobei $R^7$ vorzugsweise für Alkyl mit 1 bis 4 Kohlenstoffatomen steht. $R^5$ steht vorzugsweise

für Alkyl oder Alkoxy mit jeweils 1 bis 4 Kohlenstoffatomen, für Amino sowei für Mono- oder Dialkylamino mit 1 bis 4 Kohlenstoffatomen in jedem Alkylteil. $R^3$ steht ferner vorzugsweise für den Rest $NR^8R^9$, wobei $R^8$ und $R^9$ vorzugsweise für Alkyl mit 1 bis 4 Kohlenstoffatomen stehen oder gemeinsam mit dem angrenzenden N-Atom einen 6-gliedrigen Ring bilden, der gegebenenfalls weitere Heteroatome, wie insbesondere Stickstoff oder Sauerstoff enthalten kann, beispielsweise sei Morpholino genannt. Der Index n hat die in der Erfindungsdefinition angegebene Bedeutung.

Besonders bevorzugt werden erfindungsgemäße Wirkstoffe der Formel (I), in welcher R für Methoxy, Äthoxy oder Isopropoxy steht, $R^1$ für tert.-Butyl, steht, $R^2$ für Methyl steht und $R^3$ für Halogenalkyl, Methoxycarbonyl, gegebenenfalls durch Halogen, Halogenalkyl oder Alkyl substituiertes Phenyl sowie für den gleichen Rest, an den die Gruppierung $-(S)_n-R^3$ gebunden ist und für die Gruppierung 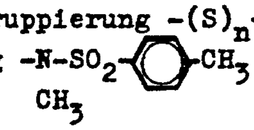 steht.

Verwendet man 2,2-Dimethyl-1-methoxycarbonyl-1-oximino-propan und N-Methyl-N-trichlormethylmercapto-carbamoylfluorid als Ausgangsstoffe, so kann der Reaktionsablauf durch das folgende Formelschema wiedergegeben werden (Verfahren a ):

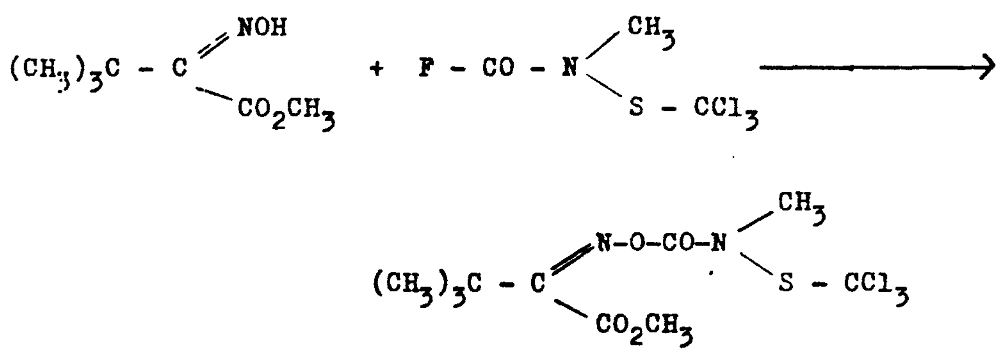

Verwendet man 2,2-Dimethyl-1-methoxycarbonyl-1-oximino-propan und N,N'-Bis-(fluorcarbonyl)-thio-bis-methylamin als Ausgangsstoffe, so kann der Reaktionsablauf durch das folgende Formelschema wiedergegeben werden (Verfahren a):

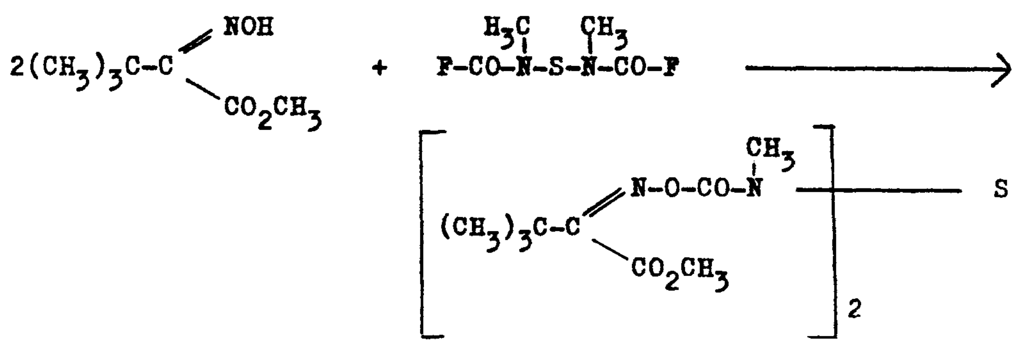

Verwendet man 2,2-Dimethyl-1-methoxycarbonyl-1-methylcarbamoyl-oximino-propan und 4-Chlorphenyl-sulfenylchlorid als Ausgangsstoffe, so kann der Reaktionsablauf durch das folgende Formelschema wiedergegeben werden (Verfahren b):

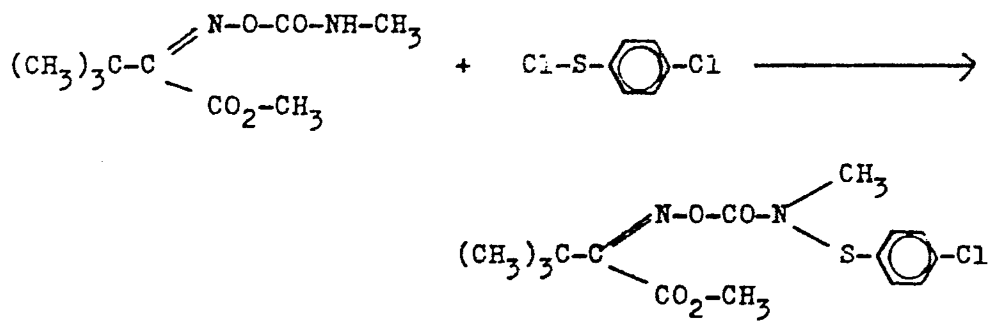

Die für das Verfahren (a) als Ausgangsstoffe verwendeten Oxime sind durch die Formel (II) allgemein definiert. In dieser Formel steht R vorzugsweise für Alkoxy mit 1 bis 4 Kohlenstoffatomen, Amino, Alkyl- oder Dialkylamino mit 1 bis 2 Kohlenstoffatomen in jedem Alkylteil. $R^1$ steht vorzugsweise für geradkettiges oder verzweigtes Alkyl mit 1 bis 6 Kohlenstoffatomen, insbesondere für tert.-Butyl oder Cyclohexyl.

Die Oxime der Formel (II) sind bekannt (vergleiche DT-OS 2 517 653) oder können auf einfache Weise hergestellt werden, indem man $\alpha$-Ketocarbonsäure-Derivate der Formel

$$R^1 - CO - COR \qquad (VI)$$

in welcher
R und $R^1$ die oben angegebene Bedeutung haben,

mit Hydroxylamin in Gegenwart eines Lösungsmittels, vorzugsweise Alkohcle bzw. wäßrige Alkohole, bei Temperaturen zwischen 20 und 100°C vorzugsweise zwischen 50 und 60°C, umsetzt. Dabei wird das Hydroxylamin vorzugsweise in Form seiner Salze, insbesondere als Hydrochlorid, in Gegenwart eines Säurebindemittels, wie beispielsweise Natriumacetat, eingesetzt. Die Isolierung der Verbindungen der Formel (II) erfolgt dadurch, daß man den während der Umsetzung entstandenen Feststoff nach Abdestillieren des Lösungsmittels mit Wasser digeriert, filtriert, getrocknet und gegebenenfalls umkristallisiert.

Die als Ausgangsstoffe verwendeten α-Ketocarbonsäurederivate der Formel (VI) sind bekannt oder lassen sich nach üblichen Verfahren herstellen. So z.B. durch Hydrolyse von Acylcyaniden, Oxidation von α-Hydroxycarbonsäuren, Claisensche Esterkondensation von Oxalsäureestern mit Carbonsäureestern und Verseifung des entstehenden Diesters. Diese Methoden sind aus den allgemeinen Lehrbüchern der organischen Chemie bekannt, wie Beyer Lehrbuch der organischen Chemie 13./14. Auflage Hirzel-Verlag Leipzig, C.R.Noller Lehrbuch der organischen Chemie, Springer Verlag.

Als Ausgangsstoffe der Formel (II) seien beispielsweise genannt:

tert.-Butyl-glyoxylsäuremethylester-oxim, tert.-Butyl-glyoxylsäureäthylester-oxim, tert.-Butyl-glyoxylsäure-iso-propylester-oxim, tert.-Butyl-glyoxylsäure-n-propylester-oxim, tert.-Butyl-glyoxylsäure-n-butylester-oxim, tert.-Butyl-glyoxylsäure-tert.-butylester-oxim, Methyl-glyoxylsäuremethylester-oxim, Cyclohexyl-glyoxylsäuremethylester, Cyclohexyl-glyoxylsäureäthylester, tert.-Butyl-glyoxylsäureamid-oxim, tert.-Butyl-glyoxylsäuremethylamid-oxim, tert.-Butyl-glyoxylsäure-äthylamid-oxim, tert.-Butyl-glyoxylsäure-dimethylamid-oxim, tert.-Butyl-glyoxylsäure-dimethylamid-oxim, tert.-Butyl-glyoxylsäure-diäthylamid-oxim.

Die außerdem für die erfindungsgemäße Umsetzung (a) als Ausgangsstoffe benötigten sulfenylierten Carbamoylhalogenide sind durch die Formel (III) allgemein definiert. In dieser Formel steht $R^2$ vorzugsweise für geradkettiges oder verzweigtes Alkyl mit 1 bis 4 Kohlenstoffatomen. $R^3$ steht vorzugsweise für Alkyl mit 1 bis 4 Kohlenstoffatomen, Halogenalkyl mit 1 bis 2 Kohlenstoff- und bis zu 5 Halogenatomen, wie insbesondere Fluor- und Chloratomen, beispielsweise seien Trifluormethyl, Chlor-difluor-methyl, Dichlorfluor-methyl und Trichlormethyl genannt, gegebenenfalls substituiertes Phenyl, wobei als Substituenten vorzugsweise genannt seien:

Halogen, insbesondere Fluor, Chlor oder Brom, Nitro, Cyano, Alkyl mit 1 bis 2 Kohlenstoffatomen und Halogenalkyl mit 1 bis 2 Kohlenstoffatomen und bis zu 5 Halogenatomen, wie insbesondere Fluor- und Chloratomen, beispielsweise sei die Trifluormethylgruppe genannt, Alkoxycarbonyl mit 1 bis 4 Kohlenstoffatomen im Alkoxyteil, Alkoxy, Halogenalkoxy, Alkylmercapto, Halogenalkylmercapto mit 1 bis 4 C-Atomen, insbesondere Trifluormethoxy oder Trifluormethylmercapto, sowie für den gleichen Rest, an den die Gruppierung $-(S)_nR^3$ gebunden ist. Ferner steht $R^3$ vorzugsweise für den Rest $-NR^5-SO_2-R^4$ wobei $R^5$ vorzugsweise für Alkyl mit 1 bis 4 Kohlenstoffatomen steht. $R^4$ steht vorzugsweise für Alkyl oder Dialkylamino mit jeweils 1 bis 4 Kohlenstoffatomen in jedem Alkylteil sowie für gegebenenfalls substituiertes Phenyl wobei als Substituenten vorzugsweise infrage kommen: Halogen, insbesondere Fluor, Chlor oder Brom, Alkyl mit 1 bis 2 Kohlenstoffatomen, Halogenalkyl mit 1 bis 2 Kohlenstoff- und bis zu 5 Halogen-atomen, wie insbesondere Fluor- oder Chloratomen, beispielsweise sei Trifluormethyl genannt, Cyano oder Nitro. Weiterhin steht $R^3$ für die Gruppierung $-NR^7-CO-R^6$, wobei $R^7$ vorzugsweise für Alkyl mit 1 bis 4 Kohlenstoffatomen steht. $R^6$ steht vorzugsweise für Alkyl oder Alkoxy mit jeweils 1 bis 4 Kohlenstoffatomen, für Amino sowie für Mono- oder Dialkylamino mit 1 bis 4 Kohlenstoffatomen in jedem Alkylteil. $R^3$ steht ferner vorzugsweise für den Rest $NR^8R^9$, wobei $R^8$ und $R^9$ vorzugsweise für Alkyl mit 1 bis 4 Kohlenstoffatomen stehen oder gemeinsam mit dem angrenzenden N-Atom einen 6-gliedrigen Ring bilden, der gegebenenfalls weitere Heteroatome, wie insbesondere Stickstoff oder Sauerstoff enthalten kann, beispielsweise sei Morpholino genannt. Der Index n hat die in der Erfindungsdefinition angegebene Bedeutung.

Die sulfenylierten Carbamoylhalogenide der Formel (III) sind bekannt (vergleiche DT-OS 2 517 653) oder lassen sich nach allgemein üblichen und bekannten Verfahren herstellen. Man erhält sie z.B. durch Umsetzung der entsprechenden Carbamidsäurehalogenide mit den entsprechenden Sulfenchloriden (vgl. Deutsche Auslegeschrift 1 297 095, US-Patentschrift 3 939 192, Deutsche Offenlegüngsschriften 2 357 930 und 2 409 463).

Als Ausgangsstoffe der Formel (III) seien beispielsweise genannt:

N-Fluordichlormethyl-sulfenyl-N-phenyl-carbamidsäurefluorid
N,N'-Bis-(fluorcarbonyl)-thio-bis-methylamin
N-Methyl-N-trichlormethylsulfenyl-carbamidsäurefluorid
N-Methyl-N-fluordichlormethylsulfenyl-carbamidsäurefluorid
N-Methyl-N-chlordifluormethylsulfenyl-carbamidsäurefluorid
N-Methyl-N-(3-trifluormethylphenyl)-sulfenyl-carbamidsäurefluorid
N-Methyl-N-(methoxycarbonyl-sulfenyl)-carbamidsäurefluorid
N-Methyl-N-[(3-methylphenyl-sulfonyl)-methylamino-sulfenyl]-carbamidsäurefluorid
N-Methyl-N-(4-chlorphenyl)-sulfenyl-carbamidsäurefluorid
N-Methyl-N-[(4-methylphenyl-sulfonyl)-methylamino-sulfenyl]-carbamidsäurefluorid

und die entsprechenden Carbamidsäure-chloride.

Die für das Verfahren (b) als Ausgangsstoffe verwendeten Oximcarbamate sind durch die Formel (IV) allgemein definiert. In der Formel (IV) stehen R und $R^1$ vorzugsweise für die Substituenten, die bei den Oximen der Formel (II) bereits vorzugsweise genannt wurden. $R^2$ steht vorzugsweise für geradkettiges oder verzweigtes Alkyl mit 1 bis 4 Kohlenstoffatomen.
Die Oximcarbamate der Formel (IV) sind bekannt (vergleiche DT-OS 2 517 653). Sie können z.B. hergestellt werden, indem man Oxime der Formel (II) mit bekannten Isocyanaten in allgemein üblicher Weise in Gegenwart eines Verdünnungsmittels, beispielsweise Methylenchlorid, bei Temperaturen zwischen 0 und 100°C umsetzt.

Als Ausgangsstoffe der Formel (IV) seien beispielsweise genannt:

tert.-Butyl-methoxycarbonyl-keton-O-methylcarbamoyl-oxim
tert.-Butyl-äthoxycarbonyl-keton-O-methylcarbamoyl-oxim
tert.-Butyl-propoxycarbonyl-keton-O-methylcarbamoyl-oxim
tert.-Butyl-iso-propoxycarbonyl-keton-O-methylcarbamoyl-oxim
tert.-Butyl-n-butoxycarbonyl-keton-O-methylcarbamoyl-oxim
tert.-Butyl-methylcarbamoyl-keton-O-methylcarbamoyl-oxim
tert.-Butyl-äthylcarbamoyl-keton-O-methylcarbamoyl-oxim
tert.-Butyl-dimethylcarbamoyl-keton-O-methylcarbamoyl-oxim
tert.-Butyl-methoxycarbonyl-keton-O-äthylcarbamoyl-oxim
tert.-Butyl-äthoxycarbonyl-keton-O-äthylcarbamoyl-oxim
Cyclohexyl-methoxycarbonyl-keton-O-methylcarbamoyl-oxim
Cyclohexyl-äthoxycarbonyl-keton-O-methylcarbamoyl-oxim
Methyl-methoxycarbonyl-keton-O-methylcarbamoyl-oxim
Methyl-äthoxycarbonyl-keton-O-methylcarbamoyl-oxim

Die außerdem für die erfindungsgemäße Umsetzung (b) als Ausgangsstoffe benötigten Sulfenchloride sind durch die Formel (V) allgemein definiert. In dieser Formel steht $R^3$ vorzugsweise für die Reste, die bei den Carbamoylhalogeniden der Formel (III) bereits vorzugsweise genannt wurden.

Die Sulfenchloride der Formel (V) sind allgemein bekannte Verbindungen der organischen Chemie. Als Beispiele seien genannt:

Trichlormethylsulfenchlorid
Dichlorfluormethylsulfenchlorid
Chlordifluormethylsulfenchlorid
Trifluormethylsulfenchlorid
Phenylsulfenchlorid
2,4-Dichlorphenylsulfenchlorid
3-Trifluormethylphenylsulfenchlorid
3-Methylphenylsulfenchlorid
Methylsulfenylchlorid
4-Chlor-3-trifluor-methylphenylsulfenylchlorid
Methoxycarbonylsulfenylchlorid
Aethoxycarbonylsulfenylchlorid

Als Verdünnungsmittel kommen für die Umsetzungen gemäß Verfahrensvarianten(a) und (b) vorzugsweise alle inerten organischen Lösungsmittel in Frage. Hierzu gehören vorzugsweise Ketone, wie Diäthylketon, insbesondere Aceton und Methyläthylketon; Nitrile, wie Propionitril, insbesondere Acetonitril; Alkohole, wie Aethanol oder Isopropanol; Aether, wie Tetrahydrofuran oder Dioxan; Formamide, wie insbesondere Dimethylformamid und halogenierte Kohlenwasserstoffe, wie Methylenchlorid, Tetrachlorkohlenstoff oder Chloroform.

Die Umsetzungen gemäß Verfahren (a) und (b) werden in Gegenwart eines Säurebinders vorgenommen. Man kann alle üblicherweise verwendbaren anorganischen und organischen Säurebinder zugeben. Hierzu gehören vorzugsweise Alkalicarbonate, wie beispielsweise Natriumcarbonat, Kaliumcarbonat und Natriumhydrogencarbonat, ferner niedere tertiäre Alkylamine, Cycloalkylamine oder Arylalkylamine, wie beispielsweise Triäthylamin, N,N-Dimethyl-benzylamin, Dicyclohexylamin, weiterhin Pyridin und Diazabicyclooctan.

Die Reaktionstemperaturen können bei der Durchführung des Verfahrens (a) in einem größeren Bereich variiert werden. Im allgemeinen arbeitet man zwischen 0 und 100°C, vorzugsweise zwischen 10 und 80°C.

Bei der Durchführung des Verfahrens (a) setzt man vorzugsweise auf 1 Mol der Verbindungen der Formel (II) 1 bis 2 Mol, für den Fall eines dimeren Produktes 0,5 Mol, an Carbamoylhalogenid der Formel (III) und 1 bis 2 Mol Säurebinder ein. Die Isolierung der Verbindungen der Formel (I) erfolgt in üblicher und bekannter Weise.

Die Reaktionstemperaturen können bei der Durchführung des Verfahrens (b) in einem größeren Bereich variiert werden. Im allgemeinen arbeitet man zwischen 0 und 100°C, vorzugsweise zwischen 10 und 50°C.

Bei der Durchführung des Verfahrens (b) werden die Ausgangsstoffe vorzugsweise in molaren Mengen eingesetzt. Die Isolierung der Verbindungen der Formel (I) erfolgt nach üblichen Methoden.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z. B. Oniscus asellus, Armadillidium vulgare, Porcellio scaber.
Aus der Ordnung der Diplopoda z. B. Blaniulus guttulatus.
Aus der Ordnung der Chilopoda z. B. Geophilus carpophagus, Scutigera spec.
Aus der Ordnung der Symphyla z. B. Scutigerella immaculata.
Aus der Ordnung der Thysanura z. B. Lepisma saccharina.
Aus der Ordnung der Collembola z. B. Onychiurus armatus.
Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z. B. Forficula auricularia.
Aus der Ordnung der Isoptera z. B. Reticulitermes spp..
Aus der Ordnung der Anoplura z. B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae,

Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincti- Laodelphax striatellus, Nilaparvata lugens, Aonidiella aurantii, Aspidiotus hederae, Pseudococcus spp., Psylla spp..

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp.,

Bibio hortulanus, Oxcinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipasaci, Tylenchulus semipenetrans, Heterodera spp., Meloidogyne spp., Aphelenchoides spp., Longidorus spp., Xiphinema spp., Trichodorus spp..

0003301

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,000 000 1 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

In entsprechenden Aufwandkonzentrationen zeigen die erfindungsgemäßen Wirkstoffe auch eine Wirksamkeit gegen Landlungenschnecken (Stylommatophora).

Beispiel A

Phaedon-Larven-Test

Lösungsmittel: 3 Gewichtsteile
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käfer-Larven abgetötet wurden; 0 % bedeutet, daß keine Käfer-Larven abgetötet wurden.

Bei diesem Test zeigen z.B. die folgenden Verbindungen der Herstellungsbeispiele überlegene Wirksamkeit gegenüber dem Stand der Technik: 2, 4, 5.

Beispiel B

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigen z.B. die folgenden Verbindungen der Herstellungsbeispiele überlegene Wirksamkeit gegenüber dem Stand der Technik: 4, 5.

Beispiel C

Grenzkonzentrations-Test / Wurzelsystemische Wirkung

Testinsekt: **Phaedon cochleariae**

Lösungsmittel: 3 Gewichtsteile Aceton

Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

Bei diesem Test zeigen z.B. die folgenden Verbindungen der Herstellungsbeispiele überlegene Wirkung gegenüber dem Stand der Technik: 2, 4, 5.

Herstellungsbeispiele

Beispiel 1

0003301

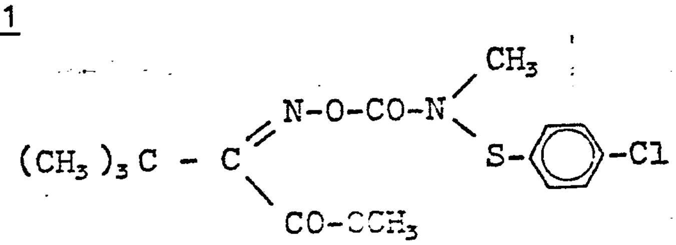

(Verfahren a))

8 g (0,05 Mol) 3,3-Dimethyl-2-oximino-butancarbonsäure-methylester und 11 g (0,05 Mol) N-Methyl-N-p-chlorphenylsulfenylcarbamidsäurefluorid werden in 100 ml absolutem Toluol gelöst und bei 20-30°C tropfenweise mit 5,05 g (0,05 Mol) Triäthylamin versetzt. Anschließend wird 12 Stunden bei Raumtemperatur gerührt. Das Reaktionsgemisch wird zweimal mit je 50 ml Wasser gewaschen, über Natriumsulfat getrocknet und durch Abdestillieren des Lösungsmittels eingeengt. Nach Entgasen am Hochvakuum verbleibt ein gelbliches Öl, das nach mehrtägigem Stehen durchkristallisiert. Nach Waschen mit Petroläther erhält man 12,5 g (70 % der Theorie) 3,3-Dimethyl-2-(4-p-chlorphenylmercapto-N-methyl)-carbamoyloximino-butancarbonsäure-methylester als farblose Kristalle vom Schmelzpunkt 69-71°C.

Herstellung des Ausgangsproduktes

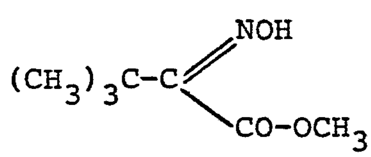

28,9 g (0,2 Mol) tert.-Butyl-glyoxysäuremethylester und 27,2 g (0,2 Mol) Natriumacetat x 3 $H_2O$ in 400 ml Methanol werden bei 60°C (Badtemperatur) tropfenweise mit einer Lösung von 14 g (0,2 Mol) Hydroxylaminhydrochlorid in 50 ml Wasser versetzt. Nach 6-stündigem Erhitzen unter Rückfluß wird das Reaktionsgemisch durch Abdestillieren der Lösungsmittel eingeengt. Der zurückbleibende Feststoff wird mit

Wasser digeriert, abfiltriert und getrocknet. Nach Umkristallisieren aus Ligroin erhält man 25g (78 % der Theorie) tert.-Butyl-glyoxylsäuremethylesteroxim vom Schmelzpunkt 69°C.

Beispiel 2

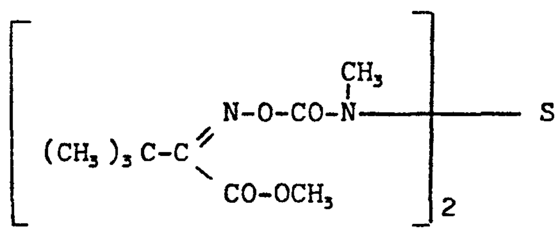

(Verfahren a)

15,9g (0,1 Mol) 3,3-Dimethyl-2-oximino-butancarbonsäure-methylester und 9,2g (0,05 Mol) N,N'-Bis(fluorcarbonyl)-thio-bis-methylamin werden in 100 ml Essigester und unter Rühren bei 20 bis 30°C tropfenweise mit 10,1g (0,1 Mol) Triäthylamin versetzt. Man läßt 12 Stunden bei 40°C weiterrühren, kühlt ab, wäscht zweimal mit je 50ml Wasser und trocknet über Natriumsulfat . Danach wird durch Abdestillieren des Lösungsmittels eingeengt, wobei der Rückstand beim Verreiben mit wenig Ligroin kristallisiert. Man erhält 19,8g (86 % der Theorie) N,N'-Bis-(3,3-dimethyl-2-oximinocarbonyl-butancarbonsäure-methylester)-thio-bis-methyl-amin vom Schmelzpunkt 99-100°C.

Beispiel 3

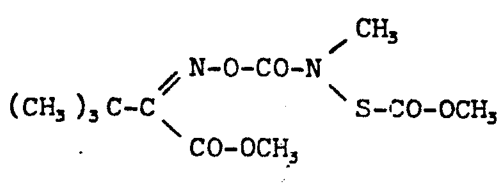

(Verfahren b)

21,6g (0,1 Mol) 3,3-Dimethyl-2-(N-methyl-carbamoyl-oximino)-butancarbonsäure-methylester und 8g (C,1 Mol) Pyridin werden in 150 ml absolutem Toluol gelöst und bei 10-15°C tropfenweise mit 14g (0,11 Mol) Methoxycarbonyl-sulfenchlorid versetzt.

Danach wird noch 12 Stunden bei Raumtemperatur gerührt, das ausgeschiedene Salz abfiltriert, die Toluolphase nacheinander mit gesättigter Natriumhydrogencarbonatlösung und Wasser gewaschen und über Natriumsulfat getrocknet. Nach Abdestillieren des Lösungsmittels verbleibt ein gelbes Cel, aus dem sich nach Zusatz von Diisopropyläther farblose Kristalle abscheiden. Man erhält 16g (52 % der Theorie) 3,3-Dimethyl-2-(N-methoxycarbonylmercapto-N-methyl)-carbamoyloximino-butancarbonsäuremethylester vom Schmelzpunkt 87-88°C.

Herstellung des Ausgangsproduktes

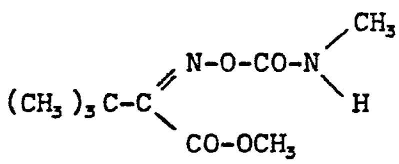

31,8g (0,2 Mol) tert.-Butyl-glyoxylsäuremethylester-oxim (vgl. Herstellung des Ausgangsproduktes bei Beispiel 1) werden in 250ml Chloroform gelöst. Zu dieser Lösung tropft man nach Zugabe von Tropfen Dibutylzinndilaurat als Katalysator 20ml Methylisocyanat. Nach 6-8stündigem Erhitzen unter Rückfluß wird das Lösungsmittel abdestilliert. Der ölige Rückstand kristallisiert beim Verreiben mit Petroläther. Nach Umkristallisation aus Ligroin/Isopropanol erhält man 32g (75 % der Theorie) tert.-Butyl-methoxycarbonyl-keton-O-methylcarbonyloxim vom Schmelzpunkt 76°C.

In analoger Weise werden die Verbindungen der nachfolgenden Tabelle 1 erhalten.

Tabelle 1

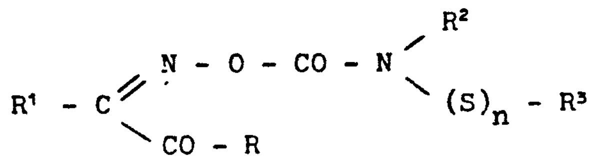

| Bsp. Nr. | R | $R^1$ | $R^2$ | $R^3$ | n | Schmelzpunkt (°C) |
|---|---|---|---|---|---|---|
| 4 | $-OCH_3$ | $C(CH_3)_3$ | $CH_3$ | 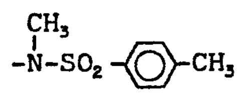 | 1 | zähfl.Oel |
| 5 | $-OCH_3$ | $C(CH_3)_3$ | $CH_3$ | $-CCl_3$ | 1 | zähfl.Oel |

Patentansprüche

1. N-sulfenylierte Carbamoyl-oxime der Formel (I)

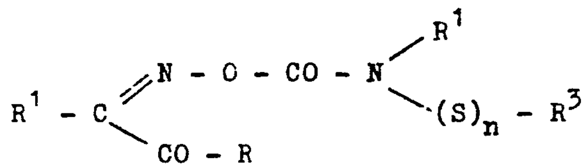

(I)

in welcher

R für Alkoxy, Amino, Monoalkyl- oder Dialkylamino steht,

$R^1$ Für Alkyl oder Cycloalkyl steht,

$R^2$ für Alkyl steht,

$R^3$ für Alkyl, Halogenalkyl, gegebenenfalls substituiertes Phenyl oder Alkoxycarbonylsteht, oder für den gleichen Rest steht, an den der Rest $-(S)_n-R^3$ gebunden ist, oder für den Rest

$-\underset{R^5}{\underset{|}{N}}-SO_2-R^4$ steht, wobei

$R^4$ für Alkyl, Dialkylamino oder gegebenenfalls substituiertes Phenyl steht, und

$R^5$ für Alkyl steht,
oder für den Rest

$-\underset{R^7}{\underset{|}{N}}-CO-R^6$ steht, wobei

$R^6$ für Alkyl, Alkoxy, Amino, Monoalkyl- oder Dialkylamino steht, und

$R^7$ für Alkyl steht,

oder für den Rest $-NR^8R^9$ steht, wobei $R^8$ und $R^9$ für Alkyl stehen oder gemeinsam mit dem angrenzenden N-Atom einen 5- bis 7-gliedrigen carbocyclischen Ring bedeuten, der gegebenenfalls weitere Heteroatome enthalten kann, und

n für die ganzen Zahlen 1 oder 2 steht.

2. Verfahren zur Herstellung der N-sulfenylierten Carbamoyloxime gemäß Anspruch 1, dadurch gekennzeichnet, daß, wenn man

a) Oxime der Formel (II)

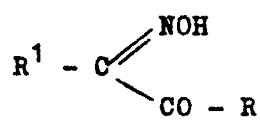

(II)

in welcher

R und $R^1$ die oben angegebene Bedeutung haben,

mit sulfenylierten Carbamoylhalogeniden der Formel (III)

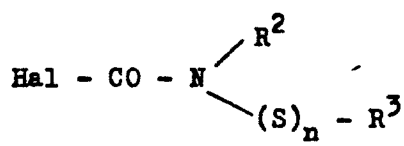

(III)

in welcher

$R^2$, $R^3$ und n die oben angegebene Bedeutung haben, und

Hal für Fluor oder Chlor steht,

in Gegenwart eines Verdünnungsmittels und eines säurebindenden Mittels umsetzt, oder

b) Oximcarbamate der Formel (IV)

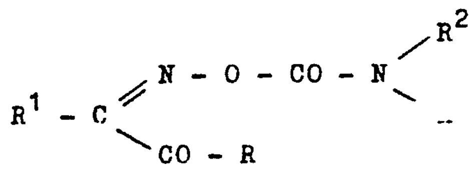

in welcher

R, $R^1$ und $R^2$ die oben angegebene Bedeutung haben,

mit Sulfenchloriden der Formel (V)

$$Cl - (S)_n - R^3 \qquad (V)$$

in welcher

$R^3$ und n die oben angegebene Bedeutung haben,

in Gegenwart eines Verdünnungsmittels und eines Säure bindenden Mittels umsetzt.

3. Insektizide, akarizide und nematozide Mittel, gekennzeichnet durch einen Gehalt an mindestens einem N-sulfenylierten Carbamoyl-oxim der Formel (I) gemäß Anspruch 1.

4. Verwendung von N-sulfenyliertem Carbamoyl-oxim der Formel (I) gemäß Anspruch 1 zur Bekämpfung von Insekten, Spinnentieren oder Nematoden.

5. Verfahren zur Bekämpfung von Insekten, Spinnentieren, oder Nematoden, dadurch gekennzeichnet, daß man N-sulfenylierte Carbamoyl-oxime der Formel (I) gemäß Anspruch 1 auf Insekten, Spinnentiere oder Nematoden und/oder ihren Lebensraum einwirken läßt.

6. Verfahren zur Herstellung insektizider, akarizider oder nematozider Mittel, dadurch gekennzeichnet, daß man N-sulfenylierte Carbamoyl-oxime der Formel (I) gemäß Anspruch 1 mit Streckmitteln und oberflächenaktiven Mitteln vermischt.

0003301

Europäisches Patentamt

# EUROPÄISCHER RECHERCHENBERICHT

Nummer der Anmeldung
EP 79 10 0102

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 243 626 (BAYER)<br>* Ansprüche *<br>-- | 1-6 | C 07 C 161/00<br>A 01 N 9/12 |
| | DE - A - 2 409 463 (BAYER)<br>* Ansprüche *<br>-- | 1-6 | |
| | DE - A - 2 654 331 (UNION CARBIDE)<br>* Ansprüche *<br>-- | 1-6 | RECHERCHIERTE SACHGEBIETE (Int. Cl.²)<br>C 07 C 161/00 |
| | DE - A - 2 600 981 (BAYER)<br>* Ansprüche *<br>---- | 1-6 | |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 23-04-1979 | GAUTIER |

EPA form 1503.1 06.78